# EUROPÄISCHE PATENTSCHRIFT

(11) **EP 0 862 858 B1**
(45) Veröffentlichungstag und Bekanntmachung des Hinweises auf die Patenterteilung: **03.07.2002**
(21) Anmeldenummer: 98100442.7
(22) Anmeldetag: 13.01.1998
(51) Int. Cl.: A01N 33/12, C08F 220/34

(54) **Verfahren zur Herstellung antimikrobieller Kunststoffe**
Process for preparing antimicrobial plastics
Procédé de préparation de matières plastiques antimicrobiennes

(30) Priorität: 06.03.1997 DE 19709075
(43) Veröffentlichungstag der Anmeldung: 09.09.1998
(73) Patentinhaber: Degussa AG, 40474 Düsseldorf (DE)
(72) Erfinder: Ottersbach, Peter, Dr., 51570 Windeck (DE); Anders, Christine, Dr., 45721 Haltern (DE)

(56) Entgegenhaltungen:
- EP-A- 0 204 312
- WO-A-91/12282
- FR-A- 2 707 288

## Beschreibung

Die Erfindung betrifft antimikrobielle Polymere, erhältlich durch Copolymerisation von tert.-Butylaminoethylmethacrylat mit einem oder mehreren aliphatisch ungesättigten Monomeren, ein Verfahren zu ihrer Herstellung und deren Verwendung.

Desweiteren betrifft die Erfindung antimikrobielle Polymere, erhältlich durch Pfropfcopolymerisation von tert.-Butylaminoethylmethacrylat mit einem oder mehreren aliphatisch ungesättigten Monomeren auf einem Substrat, ein Verfahren zu ihrer Herstellung und deren Verwendung.

Besiedlungen und Ausbreitungen von Bakterien auf Oberflächen von Rohrleitungen, Behältern oder Verpackungen sind im hohen Maße unerwünscht. Es bilden sich häufig Schleimschichten, die Mikrobenpopulationen extrem ansteigen lassen, die Wasser-, Getränke- und Lebensmittelqualitäten nachhaltig beeinträchtigen und sogar zum Verderben der Ware sowie zur gesundheitlichen Schädigung der Verbraucher führen können.

Aus allen Lebensbereichen, in denen Hygiene von Bedeutung ist, sind Bakterien fernzuhalten. Davon betroffen sind Textilien für den direkten Körperkontakt, insbesondere für den Intimbereich und für die Kranken- und Altenpflege Außerdem sind Bakterien fernzuhalten von Möbel- und Geräteoberflächen in Pflegestationen, insbesondere im Bereich der Intensivpflege und der Kleinstkinder-Pflege, in Krankenhäusern, insbesondere in Räumen für medizinische Eingriffe und in Isolierstationen für kritische Infektionsfälle sowie in Toiletten.

Gegenwärtig werden Geräte, Oberflachen von Möbeln und Textilien gegen Bakterien im Bedarfsfall oder auch vorsorglich mit Chemikalien oder deren Lösungen sowie Mischungen behandelt, die als Desinfektionsmittel mehr oder weniger breit und massiv antimikrobiell wirken. Solche chemischen Mittel wirken unspezifisch, sind häufig selbst toxisch oder reizend oder bilden gesundheitlich bedenkliche Abbauprodukte. Häufig zeigen sich auch Unverträglichkeiten bei entsprechend sensibilisierten Personen.

Eine weitere Vorgehensweise gegen oberflächige Bakterienausbreitungen stellt die Einarbeitung antimikrobiell wirkender Substanzen in eine Matrix dar.

Tert.-Butylaminoethylmethacrylat ist ein handelsübliches Monomer der Methacrylatchemie und wird insbesondere als hydrophiler Bestandteil in Copolymerisationen eingesetzt. So wird in EP-PS 0 290 676 der Einsatz verschiedener Polyacrylate und Polymethacrylate als Matrix für die Immobilisierung von bakteriziden quaternären Ammoniumverbindungen beschrieben.

Die US-PS 3 592 805 offenbart die Herstellung systemischer Fungizide, wobei perhalogenierte Acetonderivate mit Methacrylatestern, wie z. B. tert.-Butylaminoethylmethacrylat, umgesetzt werden.

In US-PS 4 515 910 wird der Einsatz von Polymeren aus Fluorwasserstoffsalzen von Aminomethacrylaten in der Dentalmedizin beschrieben. Der in den Polymeren gebundene Fluorwasserstoff tritt langsam aus der Polymermatrix aus und soll Wirkungen gegen Karies besitzen

Aus einem anderen technischen Bereich offenbart US-PS 4 532 269 ein Terpolymer aus Butylmethacrylat, Tributylzinnmethacrylat und tert.-Butylaminoethylmethacrylat. Dieses Polymer wird als antimikrobieller Schiffsanstrich verwendet, wobei das hydrophile tert.-Butylaminoethylmethacrylat die langsame Erosion des Polymers fördert und so das hochtoxische Tributylzinnmethacrylat als antimikrobiellen Wirkstoff freisetzt.

In diesen Anwendungen ist das mit Aminomethacrylaten hergestellte Copolymere nur Matrix oder Trägersubstanz für zugesetzte mikrobizide Wirkstoffe, die aus dem Trägerstoff diffundieren oder migrieren können. Polymere dieser Art verlieren mehr oder weniger schnell ihre Wirkung, wenn an der Oberfläche die notwendige "minimale inhibitorische Konzentration" (MIK) nicht mehr erreicht wird.

In EP-PS 0 204 312 wird ein Verfahren zur Herstellung von antimikrobiell ausgestatteten Acrylnitrilfasern beschrieben. Die antimikrobielle Wirkung beruht auf einem protonierten Amin als Comonomerbaustein, wobei als protonierte Spezies u. a. Dimethylaminoethylmethacrylat und tert.-Butylaminoethylmethacrylat Verwendung finden.

Die antimikrobielle Wirkung von protonierten Oberflächen ist jedoch nach Verlust der H^{⊕}-Ionen stark vermindert.

Der vorliegenden Erfindung liegt daher die Aufgabe zugrunde, Materialien mit antimikrobiellen Eigenschaften zu entwickeln, die keine auswaschbaren Wirkstoffe enthalten und deren antimikrobielle Wirkung pH-unabhängig ist.

Es wurde nun überraschend gefunden, daß durch Copolymerisation von tert.-Butylaminoethylmethacrylat mit einem oder mehreren weiteren aliphatisch ungesättigten Monomeren bzw durch Pfropfcopolymerisation von tert.-Butylaminoethylmethacrylat mit einem oder mehreren aliphatisch ungesättigten Monomeren auf einem Substrat Polymere mit einer Oberfläche erhalten werden, die dauerhaft mikrobizid ist, durch Lösemittel und physikalische Beanspruchung nicht angegriffen wird und keine Migration zeigt. Dabei ist es nicht nötig, weitere biozide Wirkstoffe einzusetzen.

Gegenstand der vorliegenden Erfindung sind daher antimikrobielle Polymere, die durch Copolymerisation von tert.-Butylaminoethylmethacrylat und einem oder mehreren weiteren alipathisch ungesättigten Monomeren erhalten werden.

Außerdem sind Gegenstand der vorliegenden Erfindung antimikrobielle Polymere, die durch Pfropfcopolymerisation von tert.-Butylaminoethylmethacrylat mit einem oder mehreren aliphatisch ungesättigten Monomeren auf einem Substrat erhalten werden.

Ebenfalls ist Gegenstand der vorliegenden Erfindung ein Verfahren zur Herstellung von antimikrobiellen Polymeren, dadurch gekennzeichnet, daß tert.-Butylaminoethylmethacrylat mit einem oder mehreren aliphatisch ungesättigten Monomeren auf einem Substrat pfropfcopolymerisiert wird.

Weiterhin ist Gegenstand der vorliegenden Erfindung ein Verfahren zur Herstellung von antimikrobiellen Polymeren, das dadurch gekennzeichnet ist, daß tert.-Butylaminoethylmethacrylat mit einem oder mehreren alipathisch ungesättigten Monomeren copolymerisiert wird.

Gegenstand der vorliegenden Erfindung ist weiterhin die Verwendung der antimikrobieilen Polymeren gemäß den Ansprüchen 1 und 2 zur Herstellung von Erzeugnissen mit einer antimikrobiellen Beschichtung aus dem Polymer.

Ferner ist Gegenstand der vorliegenden Erfindung die Verwendung der antimikrobiellen Polymeren gemäß den Ansprüchen 3 bis 5 zur Herstellung von Erzeugnissen mit einer antimikrobiellen Beschichtung aus dem Polymer.

Die Copolymerisation von tert.-Butylaminoethylmethacrylat und einem oder mehreren weiteren alipathisch ungesättigten Monomeren kann durch Pfropfcopolymerisation auf einem Substrat durchgeführt werden und ist unter weitgehendem Erhalt der mikrobiziden Wirkung möglich. Hierzu eignen sich alle aliphatisch ungesättigten Monomere, wie z. B Acrylate und Methacrylate der allgemeinen Formel 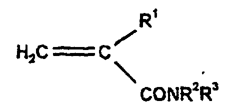 wobei R¹ ein Wasserstoffatom oder eine Methylgruppe, R² ein Wasserstoffatom, ein Metallatom oder eine verzweigte oder unverzweigte aliphatische, cycloaliphatische, heterocyclische oder aromatische Kohlenwasserstoffkette mit bis zu 20 Kohlenstoffatomen oder eine verzweigte oder unverzweigte aliphatische, cycloaliphatische, heterocyclische oder aromatische Kohlenwasserstoffkette mit bis zu 20 Kohlenstoffatomen die durch Carboxylgruppen, Carboxylatgruppen, Sulfonatgruppen, Alkylaminogruppen, Alkoxygruppen, Halogene, Hydroxygruppen, Aminogruppen, Dialkylaminogruppen, Phosphatgruppen, Phosphonatgruppen, Sulfatgruppen, Carboxamidogruppen, Sulfonamidogruppen, Phosphonamidogruppen oder Kombinationen dieser Gruppierungen derivatisiert ist, bezeichnet. R³ kann ein Wasserstoffatom oder identisch mit R² sein.

Weiterhin können Vinylverbindungen der allgemeinen Formeln 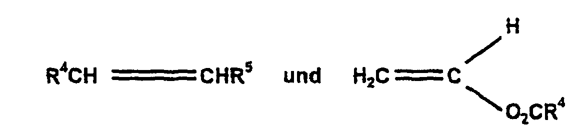 und Malein- und Fumarsäurederivate der allgemeinen Formel

R⁴O₂C-HC=CH-CO₂R⁴

eingesetzt werden, wobei R⁴ einem Wasserstoffatom, einem aromatischen Rest oder einer Methylgruppe entsprechen oder identisch mit R² sein kann.
R⁵ kann für ein Wasserstoffatom, eine Methylgruppe oder eine Hydroxylgruppe stehen, identisch mit R² sein oder einem Ether der Zusammensetzung OR² entsprechen.

Als Substratmaterialien eigenen sich vor allem alle polymeren Kunststoffe, wie z B. Polyurethane, Polyamide, Polyester und -ether, Polyetherblockamide, Polystyrol, Polyvinylchlorid, Polycarbonate, Polyorganosiloxane, Polyolefine, Polysulfone, Polyisopren, Poly-Chloropren, Polytetrafluorethylen (PTFE), entsprechende Copolymere und Blends sowie natürliche und synthetische Kautschuke, mit oder ohne strahlungssensitive Gruppen. Das erfindungsgemäße Verfahren läßt sich auch auf Oberflächen von lackierten oder anderweitig mit Kunststoff beschichteten Metall-, Glas- oder Holzkörpern anwenden.

Die Oberflächen der Substrate können vor der Pfropfcopolymerisation nach einer Reihe von Methoden aktiviert werden. Zweckmäßig werden sie zuvor in bekannter Weise mittels eines Lösemittels von Ölen, Fetten oder anderen Verunreinigungen befreit.

Die Aktivierung der Standardpolymeren kann durch UV-Strahlung erfolgen Eine geeignete Strahlenquelle ist z. B ein UV-Excimer-Gerät HERAEUS Noblelight, Hanau, Deutschland. Aber auch Quecksilberdampflampen eignen sich zur Substrataktivierung, sofern sie erhebliche Strahlungsanteile in den genannten Bereichen emittieren. Die Expositionszeit beträgt im allgemeinen 0.1 Sekunden bis 20 Minuten, vorzugsweise 1 Sekunde bis 10 Minuten.

Die Aktivierung der Standardpolymeren mit UV-Strahlung kann weiterhin mit einem zusätzlichen Photosensibilisator erfolgen. Hierzu wird der Photosensibilisator, wie z. B. Benzophenon auf die Substratoberfläche aufgebracht und bestrahlt. Dies kann ebenfalls mit einer Quecksilberdampflampe mit Expositionszeiten von 0.1 Sekunden bis 20 Minuten, vorzugsweise 1 Sekunde bis 10 Minuten, erfolgen.

Die Aktivierung kann erfindungsgemäß auch durch ein Hochfrequenz- oder Mikrowellenplasma (Hexagon, Fa. Technics Plasma, 85551 Kirchheim, Deutschland) in Luft, Stickstoff- oder Argon-Atmosphäre erreicht werden. Die Expositionszeiten betragen im allgemeinen 30 Sekunden bis 30 Minuten, vorzugsweise 2 bis 10 Minuten. Der Energieeintrag liegt bei Laborgeräten zwischen 100 und 500 W, vorzugsweise zwischen 200 und 300 W.

Weiterhin lassen sich auch Korona-Geräte (Fa SOFTAL, Hamburg, Deutschland) zur Aktivierung verwenden. Die Expositionszeiten betragen in diesem Falle in der Regel 1 bis 10 Minuten, vorzugsweise 1 bis 60 Sekunden.

Die Aktivierung durch Elektronen- oder γ-Strahlen (z. B. aus einer Kobalt-60-Quelle) sowie die Ozonisierung ermöglicht kurze Expositionszeiten, die im allgemeinen 0.1 bis 60 Sekunden betragen.

Beflammung von Oberflächen führen ebenfalls zu deren Aktivierung. Geeignete Geräte, insbesondere solche mit einer Barriere-Flammfront, lassen sich auf einfache Weise bauen oder beispielsweise beziehen von der. Fa. ARCOTEC, 71297 Mönsheim, Deutschland. Sie können mit Kohlenwasserstoffen oder Wasserstoff als Brenngas betrieben werden. In jedem Fall muß eine schädliche Überhitzung des Substrats vermieden werden, was durch innigen Kontakt mit einer gekühlten Metallfläche auf der von der Beflammungsseite abgewandten Substratoberfläche leicht erreicht wird. Die Aktivierung durch Beflammung ist dementsprechend auf verhältnismäßig dünne, flächige Substrate beschränkt. Die Expositionszeiten belaufen sich im allgemeinen auf 0.1 Sekunde bis 1 Minute, vorzugsweise 0.5 bis 2 Sekunden, wobei es sich ausnahmslos um nicht leuchtende Flammen behandelt und die Abstände der Substratoberflächen zur äußeren Flammenfront 0.2 bis 5 cm, vorzugsweise 0.5 bis 2 cm betragen.

Die so aktivierten Substratoberflächen werden nach bekannten Methoden, wie Tauchen, Sprühen oder Streichen, mit tert.-Butylaminoethylmethacrylat und einem oder mehreren weiteren aliphatisch ungesättigten Monomeren, gegebenenfalls in Lösung, beschichtet. Als Lösemittel haben sich Wasser und Wasser-Ethanol-Gemische bewährt, doch sind auch andere Lösemittel verwendbar, sofern sie ein ausreichendes Lösevermögen für die Monomeren aufweisen und die Substratoberflächen gut benetzen. Lösungen mit Monomerengehalten von 1 bis 10 Gew.-%, beispielsweise mit etwa 5 Gew.-% haben sich in der Praxis bewährt und ergeben im allgemeinen in einem Durchgang zusammenhängende, die Substratoberfläche bedeckende Beschichtungen mit Schichtdicken, die mehr als 0.1 µm betragen können.

Die Propfcopolymerisation der auf die aktivierten Oberflächen aufgebrachten Monomeren wird zweckmäßig durch Strahlen im kurzwelligen Segment des sichtbaren Bereiches oder im langwelligen Segment des UV-Bereiches der elektromagnetischen Strahlung bewirkt. Gut geeignet ist z. B. die Strahlung eines UV-Excimers der Wellenlängen 250 bis 500 nm, vorzugsweise von 290 bis 320 nm Auch hier sind Quecksilberdampflampen geeignet, sofern sie erhebliche Strahlungsanteile in den genannten Bereichen emittieren. Die Expositionszeiten betragen im allgemeinen 10 Sekunden bis 30 Minuten, vorzugsweise 2 bis 15 Minuten.

Copolymere mit tert.-Butylaminoethylmethacrylat als Comonomerbaustein zeigen auch ohne Pfropfung auf eine Substratoberfläche ein intrinsisch mikrobizides Verhalten.

Eine mögliche Ausführungsform der vorliegenden Erfindung besteht darin, daß die Copolymerisation von tert.-Butylaminomethacrylat und einem oder mehreren weiteren alipatisch ungesättigten Monomeren auf einem Substrat durchgeführt werden kann

Die erfindungsgemäßen Polymeren aus tert.-Butylaminoethylmethacrylat und einem oder mehreren weiteren aliphatisch ungesättigten Monomeren können in Lösung auf das Substrat aufgebracht werden.

Als Lösungsmittel eignen sich beispielsweise Wasser, Ethanol, Methanol, Methylethylketon, Diethylether, Dioxan, Hexan, Heptan, Benzol, Toluol, Chloroform, Dichlormethan, Tetrahydrofuran und Acetonitril.

Die Lösung der erfindungsgemäßen Polymeren werden z. B. durch Tauchen, Aufsprühen oder Lackieren auf die Standardpolymere aufgebracht.

Werden die erfindungsgemäßen Polymere ohne Pfropfung direkt auf der Substratoberfläche erzeugt, so werden geeignete Initiatoren zugesetzt

Als Initiatoren lassen sich u. a. Azonitrile, Alkylperoxide, Hydroperoxide, Acylperoxide, Peroxoketone, Perester, Peroxocarbonate, Peroxodisulfat, Persulfat und alle üblichen Photoinitiatoren wie z. B. Acetophenone und Benzophenon verwenden.

Die Polymerisationsinitiierung kann thermisch oder durch elektromagnetische Strahlung, wie z. B. UV-Licht oder γ-Strahlung erfolgen.

Die mit den erfindungsgemaßen Polymeren beschichteten Erzeugnisse können medizintechnische Artikel oder Hygieneartikel sein. Ebenso können erfindungsgemäße Erzeugnisse, die durch Pfropfcopolymerisation erhalten werden, medizintechnische Artikel oder Hygieneartikel sein.

Die mit den erfindungsgemäßen Polymeren beschichteten Erzeugnisse können zur Herstellung von medizintechnischen Artikeln wie z. B. Katheter, Blutbeutel, Drainagen, Führungsdrähte und Operationsbestecke verwendet werden.

Weiterhin können die erfindungsgemäßen Polymeren zur Herstellung von Hygieneartikeln wie beispielsweise Zahnbürsten, Toilettensitze, Kämme und Verpackungsmaterialien verwendet werden

Die folgenden Beispiele sollen die Erfindung erläutern:

### Beispiel 1.

19.2 g tert.-Butylaminoethylmethacrylat, 2.6 g Methylmethacrylat und 150 ml Tetrahydrofuran werden unter Schutzgas auf 60 °C erhitzt. Nach Erreichen der Temperatur werden 0.33 g Azobisisobutyronitril gelöst in 10 ml Tetrahydrofuran zugegeben. Nach Ablauf von 24 Stunden wird die Reaktion durch Einrühren der Mischung in 1 l einer Wasser/Eis-Mischung beendet. Das Reaktionsprodukt wird abfiltriert und mit 300 ml n-Hexan gewaschen. Anschließend wird das Produkt auf mehrere Soxlets verteilt und 24 Stunden mit Wasser extrahiert, danach bei 50 °C 12 Stunden im Vakuum getrocknet.

### Beispiel 2:

4 g Copolymer aus Beispiel 1 werden in 40 ml Tetrahydrofuran gelöst. In diese Lösung wird eine Polyamid 12-Folie 5 Sekunden lang eingetaucht, 10 Sekunden aus der Lösung entnommen und dann wiederum 5 Sekunden eingetaucht, so daß sich nach der anschließenden Trocknung bei Raumtemperatur unter Normaldruck ein gleichmäßiger Film des Copolymers auf der Polyamidfolie gebildet hat. Die Folie wird dann 24 Stunden bei 50 °C im Vakuum getrocknet. Anschließend wird die Folie in Wasser 5 mal 6 Stunden bei 30 °C extrahiert, dann bei 50 °C 12 Stunden getrocknet.

### Beispiel 3:

4 g Copolymer aus Beispiel 1 werden in 40 ml Tetrahydrofuran gelöst. In diese Lösung wird eine Polyvinylchloridfolie 2 Sekunden lang eingetaucht, 10 Sekunden aus der Lösung entnommen und dann wiederum 2 Sekunden eingetaucht, so daß sich nach der anschließenden Trocknung bei Raumtemperatur unter Normaldruck ein gleichmäßiger Film des Copolymers auf der Polyvinylchloridfolie gebildet hat Die Folie wird dann 24 Stunden bei 50 °C im Vakuum getrocknet. Anschließend wird die Folie in Wasser 5 mal 6 Stunden bei 30 °C extrahiert, dann bei 50 °C 12 Stunden getrocknet.

### Beispiel 4:

Eine Polyamid 12-Folie wird 2 Minuten bei einem Druck von 1 mbar der 172 nm-Strahlung einer Excimerstrahlungsquelle der Fa. Heraeus ausgesetzt. Die so aktivierte Folie wird unter Schutzgas in einen Bestrahlungsreaktor gelegt und fixiert. Daraufhin wird die Folie im Schutzgasgegenstrom mit 20 ml einer Mischung auf 3 g tert.-Butylaminoethylmethacrylat, 2 g Methylmethacrylat und 95 g Methanol überschichtet. Die Bestrahlungskammer wird verschlossen und im Abstand von 10 cm unter eine Excimerbestrahlungseinheit der Fa. Heraeus gestellt, die eine Emission der Wellenlänge 308 nm aufweist. Die Bestrahlung wird gestartet, die Belichtungsdauer beträgt 15 Minuten. Die Folie wird anschließend entnommen und mit 30 ml Methanol abgespult. Die Folie wird dann 12 Stunden bei 50 °C im Vakuum getrocknet. Anschließend wird die Folie in Wasser 5 mal 6 Stunden bei 30 °C extrahiert, dann bei 50 °C 12 Stunden getrocknet.

### Messung der bakteriziden Wirkung:

Die bakterizide Wirkung von beschichteten Kunststoffen wurde wie folgt gemessen Auf ein 2 x 2 cm großes Folienstück wurden 100 µl Zellsuspension von Klebsiella pneumoniae aufgesetzt. Die Bakterien waren in PBS-Puffer (Phosphat-gepufferter Saline) suspendiert; die Zellkonzentration betrug 10⁵ Zellen pro ml Pufferlösung. Dieser Tropfen wurde bis zu 3 h inhubiert. Damit ein eventuelles Eintrocknen verhindert wird, wurde das Folienstück in eine mit 1 ml Wasser benetzte Petrischale aus Polystyrol gelegt. Nach Beendigung der Kontaktzeit wurden die 100 µl mit einer Eppendorfspitze aufgenommen und in 1.9 ml steriler PBS verdünnt. 0.2 ml dieser Lösung wurden auf Nähragar ausplattiert. Aus der Zahl der gewaschenen Kolonien wurde die Inaktivierungsrate berechnet.

### Überprüfung der Beständigkeit der Beschichtungen:

Vor den Messungen zur bakteriziden Wirkung wurden die beschichteten Folien folgenden Vorbehandlungen unterzogen:
- A:: 10 minütiges Waschen in kochendem Wasser
- B:: 10 minütiges Waschen in 96 %iger ethanolischer Lösung
- C:: 10 minütiges Waschen in 25 °C warmem Wasser unter Ultraschallbehandlung
- D:: keine Vorbehandlung

Die Ergebnisse der Messungen unter Berücksichtigung der jeweiligen Vorbehandlung sind in Tabelle 1 aufgelistet

**Tabelle 1**

| **Inaktivierungsrate** | | | | |
|---|---|---|---|---|
| Beispiel: | A | B | C | D |
| 2 | 2% | < 10 % | 51 % | 99,9% |
| 3 | 2% | < 10% | 50 % | 99,9% |
| 4 | 99,9 % | 99.9 % | 99.9 % | 99.9 % |

Die durch Propfung einer Substratoberfläche erzeugten antimikrobiellen Schichten zeigen nach thermischer, chemischer oder mechanischer Vorbehandlung weiterhin eine nahezu vollständige Inaktivierung der aufgebrachten Bakterien. Die physikalisch adhärierten Schichten sind gegen die Vorbehandlungen nach den Methoden A, B und C weniger stabil.

Zusätzlich zur oben beschriebenen mikrobiziden Wirksamkeit gegenüber Zellen von Klebsiella pneumoniae zeigten alle beschichteten Folien ebenfalls eine mikrobizide Wirkung gegenüber Zellen von Pseudomonas aeruginosa, Staphylococcus aureus, Escherichia coli, Rhizopus oryzae, Candida tropicalis und Tetrahymena pyriformis. Die Inaktivierungsrate nach der Behandlungsmethode D lag in diesen Fällen ebenfalls bei mehr als 99 %.

## Patentansprüche

1. Antimikrobielle Polymere, erhältlich durch Copolymerisation von tert.-Butylaminoethylmethacrylat mit einem oder mehreren weiteren aliphatisch ungesättigten Monomeren.

2. Antimikrobielle Polymere nach Anspruch 1,
erhältlich durch Copolymerisation von tert.-Butylaminoethylmethacrylat mit einem oder mehreren aliphatisch ungesättigten Monomeren auf einem Substrat.

3. Antimikrobielle Polymere, erhältlich durch Pfropfcopolymerisation von tert.-Butylaminoethylmethacrylat mit einem oder mehreren aliphatisch ungesättigten Monomeren auf einem Substrat.

4. Antimikrobielle Polymere nach Anspruch 3,
erhältlich durch Aktivierung des Substrats vor der Pfropfpolymerisation.

5. Antimikrobielle Polymere nach Anspruch 4,
erhältlich durch Aktivierung des Substrats durch UV-Strahlung mit und ohne zusätzlichen Photosensibilisator, Plasmabehandlung, Coronabehandlung, Beflammung, Ozonisierung, elektrische Entladung oder γ-Strahlung.

6. Verfahren zur Herstellung von antimikrobiellen Polymeren nach den Ansprüchen 1 und 2,
**dadurch gekennzeichnet,**
**daß** tert.-Butylaminoethylmethacrylat mit einem oder mehreren aliphatisch ungesättigten Monomeren copolymerisiert wird.

7. Verfahren nach Anspruch 6,
**dadurch gekennzeichnet,**
**daß** die Copolymerisation von tert.-Butylaminoethylmethacrylat mit einem oder mehreren aliphatisch ungesättigten Monomeren auf einem Substrat durchgeführt wird.

8. Verfahren zur Herstellung von antimikrobiellen Polymeren nach den Ansprüchen 3 bis 5,
**dadurch gekennzeichnet,**
**daß** tert.-Butylaminoethylmethacrylat mit einem oder mehreren aliphatisch ungesättigten Monomeren auf einem Substrat pfropfcopolymerisiert wird.

9. Verfahren nach Anspruch 8,
**dadurch gekennzeichnet,**
**daß** das Substrat vor der Pfropfcopolymerisation aktiviert wird.

10. Verfahren nach Anspruch 9,
**dadurch gekennzeichnet,**
**daß** die Aktivierung des Substrats durch UV-Strahlung mit und ohne zustätzlichen Photosensibilisator, Plasmabehandlung, Koronabehandlung, Beflammung, Ozonisierung, elektrische Entladung oder γ-Strahlung erfolgt

11. Verwendung der antimikrobiellen Polymeren gemäß den Ansprüchen 1 und 2 zur Herstellung von Erzeugnissen mit einer antimikrobiellen Beschichtung aus dem Polymer.

12. Verwendung der antimikrobiellen Polymeren gemäß den Ansprüchen 1 und 2 zur Herstellung von medizintechnischen Artikeln mit einer antimikrobiellen Beschichtung aus dem Polymer.

13. Verwendung der antimikrobiellen Polymeren gemäß den Ansprüchen 1 und 2 zur Herstellung von Hygieneartikeln mit einer antimikrobiellen Beschichtung aus dem Polymer.

14. Verwendung der antimikrobiellen Polymeren gemäß den Ansprüchen 3 bis 5 zur Herstellung von Erzeugnissen mit einer antimikrobiellen Beschichtung aus dem Polymer.

15. Verwendung der antimikrobiellen Polymeren gemäß den Ansprüchen 3 bis 5 zur Herstellung von medizintechnischen Artikeln mit einer antimikrobiellen Beschichtung aus dem Polymer

16. Verwendung der antimikrobiellen Polymeren gemäß den Ansprüchen 3 bis 5 zur Herstellung von Hygieneartikeln mit einer antimikrobiellen Beschichtung aus dem Polymer.

## Claims

1. An antimicrobial polymer obtainable by copolymerizing tert-butylaminoethyl methacrylate with one or more other aliphatically unsaturated monomers.

2. An antimicrobial polymer according to claim 1,
obtainable by copolymerizing tert-butylaminoethyl methacrylate with one or more aliphatically unsaturated monomers on a substrate.

3. An antimicrobial polymer obtainable through graft copolymerization of tert-butylaminoethyl methacrylate with one or more aliphatically unsaturated monomers on a substrate.

4. An antimicrobial polymer according to claim 3,
obtainable by activating the substrate prior to the graft polymerization.

5. An antimicrobial polymer according to claim 4,
obtainable by activating the substrate by UV radiation with or without added photosensitizer, and with or without plasma treatment, corona treatment, flame treatment, ozonization, electrical discharge or γ-radiation.

6. A process for preparing antimicrobial polymers according to either of claims 1 and 2,
**characterized in that**
tert-butylaminoethyl methacrylate is copolymerized with one or more aliphatically unsaturated monomers.

7. A process according to claim 6,
**characterized in that**
tert-butylaminoethyl methacrylate is copolymerized with one or more aliphatically unsaturated monomers on a substrate.

8. A process for preparing antimicrobial polymers according to any of claims 3 to 5,
**characterized in that**
tert-butylaminoethyl methacrylate is graft-polymerized with one or more aliphatically unsaturated monomers on a substrate.

9. A process according to claim 8,
**characterized in that**
the substrate is activated prior to the graft polymerization.

10. A process according to claim 9,
**characterized in that**
the substrate is activated by UV radiation with or without added photosensitizer, and with or without plasma treatment, corona treatment, flame treatment, ozonization, electrical discharge or γ-radiation.

11. Use of the antimicrobial polymers according to either of claims 1 and 2 for producing products with an antimicrobial coating made from the polymer.

12. Use of the antimicrobial polymers according to either of claims 1 and 2 for producing items for medical technology with an antimicrobial coating made from the polymer.

13. Use of the antimicrobial polymers according to either of claims 1 and 2 for producing items for hygiene uses with an antimicrobial coating made from the polymer.

14. Use of the antimicrobial polymers according to any of claims 3 to 5 for producing products with an antimicrobial coating made from the polymer.

15. Use of the antimicrobial polymers according to any of claims 3 to 5 for producing items for medical technology with an antimicrobial coating made from the polymer.

16. Use of the antimicrobial polymers according to any of claims 3 to 5 for producing items for hygiene uses with an antimicrobial coating made from the polymer.

## Revendications

1. Polymères antimicrobiens accessibles par copolymérisation de méthacrylate de terbutylaminoéthyle avec un ou plusieurs autres monomères aliphatiquement non saturés.

2. Polymères antimicrobiens selon la revendication 1,
accessibles par copolymérisation du méthacrylate de terbutylaminoéthyle avec un ou plusieurs monomères aliphatiquement non saturés sur un substrat.

3. Polymères antimicrobiens accessibles par copolymérisation par greffage du méthacrylate de terbutylaminoéthyle avec un ou plusieurs monomères aliphatiquement non saturés sur le substrat.

4. Polymères antimicrobiens selon la revendication 3,
accessibles par activation du substrat avant la polymérisation par greffage.

5. Polymères antimicrobiens selon la revendication 4,
accessibles par activation du substrat par rayonnement UV avec et sans photosensibilisateur supplémentaire, traitement par le plasma, traitement par le rayonnement Corona, traitement à la flamme, ozonisation, décharge électrique ou rayonnement γ.

6. Procédé de préparation de polymères antimicrobiens selon la revendication 1 et la revendication 2,
**caractérisé en ce qu'**
on copolymérise le méthacrylate de terbutylaminoéthyle avec un ou plusieurs monomères aliphatiquement non saturés.

7. Procédé selon la revendication 6,
**caractérisé en ce qu'**
on effectue la copolymérisation du méthacrylate de terbutylaminoéthyle avec un ou plusieurs monomères aliphatiquement non saturés sur un substrat.

8. Procédé de préparation de polymères antimicrobiens selon l'une des revendications 3 à 5,
**caractérisé en ce qu'**
on copolymérise par greffage le méthacrylate de terbutylaminoéthyle avec un ou plusieurs monomères non saturés alyphatiquement, sur un substrat.

9. Procédé selon la revendication 8,
**caractérisé en ce qu'**
on active le substrat avant la copolymérisation par greffage.

10. Procédé selon la revendication 9,
**caractérisé en ce qu'**
on effectue l'activation du substrat par irradiation aux UV avec ou sans activateur supplémentaire, traitement par le plasma, traitement par rayonnement Corona, traitement par la flamme, ozonisation, décharge électrique ou rayonnement γ.

11. Utilisation des polymères antimicrobiens conformément à la revendication 1 et la revendication 2,
pour la préparation de produits ayant un revêtement antimicrobien à base de polymère.

12. Utilisation des polymères antimicrobiens conformément à la revendication 1 et à la revendication 2,
pour la préparation d'articles de technique médicale ayant un revêtement antimicrobien à base de polymère;

13. Utilisation des polymères antimicrobiens conformément à la revendication 1 et à la revendication 2,
pour la préparation d'articles d'hygiène ayant un revêtement antimicrobien à base de polymère.

14. Utilisation des polymères antimicrobiens conformément aux revendications 3 à 5,
pour la préparation de produits ayant un revêtement antimicrobien à base de polymère.

15. Utilisation des polymères antimicrobiens conformément à l'une quelconque des revendications 3 à 5,
pour la préparation d'articles de technique médicale ayant un revêtement antimicrobien à base de polymère.

16. Utilisation des polymères antimicrobiens conformément à l'une quelconque des revendications 3 à 5,
pour la préparation d'articles d'hygiène ayant un revêtement antimicrobien à base de polymère.
